# EUROPÄISCHE PATENTSCHRIFT

(11) **EP 4 179 944 B1**
(45) Veröffentlichungstag und Bekanntmachung des Hinweises auf die Patenterteilung: **03.04.2024**
(21) Anmeldenummer: 21208487.5
(22) Anmeldetag: 16.11.2021
(51) Int. Cl.: A47L 11/30, A47L 11/40

(54) **FILTEREINHEIT FÜR DEN ANSAUGSTUTZEN IM SCHMUTZWASSERTANK EINER BODENREINIGUNGSMASCHINE**
FILTER UNIT FOR THE INTAKE FITTING IN THE DIRTY WATER TANK OF A FLOOR CLEANING MACHINE
UNITÉ DE FILTRE POUR LA PIPE D'ASPIRATION DANS LE RÉSERVOIR D'EAUX USÉES D'UNE MACHINE DE NETTOYAGE DU SOL

(43) Veröffentlichungstag der Anmeldung: 17.05.2023
(73) Patentinhaber: Hako GmbH, 23843 Bad Oldesloe (DE)
(72) Erfinder: Thiele-Fiesinger, Jens, 23795 Bad Segeberg (DE); Tabeling, Christian, 23617 Stockelsdorf (DE)
(74) Vertreter: Bird & Bird LLP - Hamburg

(56) Entgegenhaltungen:
- US-A1- 2006 207 052
- US-B1- 7 073 226

## Beschreibung

Die vorliegende Erfindung betrifft eine Filtereinheit für den Ansaugstutzen bzw. Saugstutzen im Schmutzwassertank einer Bodenreinigungsmaschine, sowie eine Bodenreinigungsmaschine, insbesondere Scheuersaugmaschine, mit einer solchen Filtereinheit. Eine Filtereinheit gemäß dem Oberbegriff des Anspruchs 1 ist z.B. aus US- A-7073226 bekannt.

Aus dem Stand der Technik bekannte Bodenreinigungsmaschinen bzw. Scheuersaugmaschinen, die mittels eines Fahrwerks über eine zu reinigende Bodenfläche bewegt werden können, weisen einen Bürstenkopf auf, der mit angetriebenen Bürsten versehen ist, die mit der zu reinigenden Bodenfläche eingreifen können, wobei im Bereich des Bürstenkopfes Reinigungsflüssigkeit auf die zu reinigenden Bodenfläche aufgebracht wird, um daran anhaftenden Schmutz zu lösen. In Fahrtrichtung der Scheuersaugmaschine gesehen hinter dem Bürstenkopf ist dann für gewöhnlich ein sogenannter Saugfuß angeordnet, mit dessen Hilfe zuvor auf die zu reinigenden Bodenfläche aufgebrachte Reinigungsflüssigkeit wieder in einen Schmutzwassertank der Maschine abgesaugt werden kann. Zu diesem Zweck ist eine Saugturbine vorgesehen, die über einen Ansaugstutzen mit dem Inneren des Schmutzwassertank verbunden ist, um darin einen Unterdruck zu erzeugen, wobei weiter eine Saugleitung vom Inneren des Schmutzwassertanks zum Saugfuß führt, sodass ein Saugbereich des Saugfußes durch die Saugturbine mit Unterdruck beaufschlagt wird. Dies wiederum führt dazu, dass ein Saugluftstrom von dem Saugfuß in den Schmutzwassertank erzeugt werden kann, durch den auf der zu reinigenden Bodenfläche befindliche Reinigungsflüssigkeit mit in den Schmutzwassertank gerissen wird. Dabei ist es nachteilig, wenn Schaum, Schmutzwasser selbst sowie in dem Schmutzwasser bzw. in dem Saugluftstrom enthaltende Schmutzpartikel in die Saugturbine gelangen, da beides zu Schäden an der Saugturbine bzw. an einem diese antreibenden Elektromotor führen kann. Daher ist es aus dem Stand der Technik auch bekannt, an dem Ansaugstutzen eine Filtereinheit vorzusehen, durch die verhindert wird, dass zumindest Schmutzpartikel in den Ansaugstutzen und damit die Saugturbine gelangen. Darüber hinaus ist auch bekannt, an dem Ansaugstutzen ein Schwimmerventil vorzusehen, das den Ansaugstutzen verschließt, wenn der Flüssigkeitspegel in dem Schmutzwassertank einen vorgegebenen Maximalpegel erreicht hat.

Derartige aus dem Stand der Technik bekannte Filtereinheiten und Schwimmerventile haben sich jedoch deswegen als nachteilhaft erwiesen, weil häufig nicht sichergestellt ist, dass die Filtereinheit durch einen Benutzer auch wieder in der korrekten Weise montiert wird, sodass nach einem Reinigen die Filtereinheit mit dem Schwimmerventil korrekt positioniert ist und den Durchtritt von Schmutz bzw. Reinigungsflüssigkeit hin zu der Saugturbine verhindert. Außerdem verhindern die aus dem Stand der Technik bekannten Filtereinheiten und Schwimmerventile nicht zuverlässig den Eintritt von Schaum in die Saugturbine.

Daher ist es die Aufgabe der vorliegenden Erfindung, eine Filtereinheit mit Ventil für den Ansaugstutzen im Schmutzwassertank einer Bodenreinigungsmaschine bereitzustellen, die zuverlässig und einfach zu montieren ist. Darüber hinaus ist es wünschenswert, dass sie auch zuverlässig den Eintritt von Schaum in die Saugturbine verhindert.

Erfindungsgemäß wird diese Aufgabe gelöst durch eine Filtereinheit für einen Saugstutzen einer Bodenreinigungsmaschine, insbesondere einen Saugstutzen im Schmutzwassertank der Bodenreinigungsmaschine. Die Filtereinheit weist einen im Wesentlichen hülsenförmigen Grundkörper auf, der sich zwischen einem ersten Stirnende und einem zweiten Stirnende erstreckt und an dem ersten Stirnende eine Eintrittsöffnung aufweist. Weiter weist die Filtereinheit einen im Wesentlichen ringförmigen Schwimmerkörper auf, der um den Grundkörper angeordnet und entlang des Grundkörpers zwischen einer Verschlussstellung und einer Offenstellung verlagerbar ist. Ferner hat die Filtereinheit einen Deckel, der an dem ersten Stirnende des Grundkörpers angeordnet ist, wobei der Deckel wenigstens eine Eingangsöffnung aufweist, die ausgestaltet ist, dass sie von dem Schwimmerkörper verschlossen ist, wenn dieser in der Verschlussstellung ist, und die geöffnet ist, wenn der Schwimmerkörper von der Verschlussstellung beabstandet ist. In dem Deckel ist ein Fluidkanal vorgesehen, der ausgestaltet ist, dass ein Fluid von der Eingangsöffnung in die Eintrittsöffnung strömen kann. Die Filtereinheit hat ferner ein hülsenförmiges Filterelement, das derart um den Grundkörper angeordnet ist, dass zwischen dem Grundkörper und dem Filterelement ein Ringraum gebildet ist, in dem der Schwimmerkörper zwischen der Verschlussstellung und der Offenstellung verlagerbar angeordnet ist. Das Filterelement ist zumindest teilweise aus einem Filtermaterial gebildet, sodass ein Fluid durch das Filtermaterial hindurchtreten kann, während in dem Fluid enthaltene Partikel an dem Filtermaterial abgeschieden werden. Das Filtermaterial kann an einer Umfangsfläche des Filterelements angeordnet sein.

Die erfindungsgemäße Filtereinheit mit Schwimmerventil kann in einfacher Weise auf den Ansaugstutzen im Schmutzwassertank einer Scheuersaugmaschine aufgesetzt werden, in dem der hülsenförmige Grundkörper über den Ansaugstutzen geschoben wird.

Es ist erfindungsgemäß jedoch auch denkbar, dass der Grundkörper Teil des Ansaugstutzens ist und gegebenenfalls sogar einstückig mit diesem ausgebildet ist.

Wenn der Pegel im Schmutzwassertank während und infolge des Betriebs der Bodensaugmaschine ansteigt und dabei den Schwimmerkörper im Ringraum zunehmend anhebt, kann der Schwimmerkörper die Eingangsöffnung verschließen (Verschlussstellung). Durch Verschließen der Eingangsöffnung wird dann verhindert, dass Schmutzwasser aus dem Schmutzwassertank in die stromab befindliche Saugturbine gelangt und diese schädigt. Wenn die Eingangsöffnung durch den Schwimmerkörper verschlossen ist, kann dies dem Benutzer der Scheuersaugmaschine angezeigt werden, wobei es zum einen möglich ist, dass der sich durch den Verschluss abfallende Motorstrom der Saugturbine dazu führt, dass ein entsprechendes Signal für den Benutzer produziert wird. Zum anderen ist es auch denkbar, dass ein Schalter oder ein berührungsloser Sensor durch den Schwimmerkörper betätigt und dadurch ein entsprechendes Signal für den Benutzer generiert wird.

Eine ähnliche Wirkung wird auch erreicht, wenn während der Fahrt der Scheuersaugmaschine der Pegel in dem Schmutzwassertank stark schwankt und der Schwimmerkörper nur kurzzeitig stark angehoben wird. Dann wird ebenfalls die Eingangsöffnung verschlossen, und dem Benutzer kann dies angezeigt werden. Auch in einem solchen Fall ist sichergestellt, dass kein Schmutzwasser zur Saugturbine gelangt.

Zusätzlich verhindert das Filterelement, das den Ringraum um den Grundkörper begrenzt, dass in dem Saugluftstrom enthaltende Schmutzpartikel durch die Eingangsöffnung und die eine Öffnung hindurch hin zu der Saugturbine gelangen können. Wenn das Filterelement bzw. das daran vorgesehene Filtermaterial so stark verschmutzt ist, dass nur noch ein geringer Luftstrom hindurchtritt, kann dies auch dazu führen, dass der Schwimmerkörper gegen die Eingangsöffnung gezogen wird und diese verschließt. Dies kann dann mittels der schon beschriebenen Möglichkeiten dem Benutzer angezeigt werden.

Da der Schwimmerkörper in dem Ringraum angeordnet ist und von dem Grundkörper geführt wird, ergibt sich insgesamt ein kompakter Aufbau, und der Schwimmerkörper ist unverlierbar an dem Grundkörper gehaltert, sodass er bei einer Demontage des Filterelements zu Reinigungszwecken nicht verloren gehen kann, was zur Folge hätte, dass nach einer Wiederaufnahme des Betriebs nach der Reinigung des Filterelements die Verschlusswirkung bei einem zu hohen Pegelstand in dem Schmutzwassertank nicht mehr gegeben wäre und Schmutzwasser ungehindert in die Saugturbine eindringen könnte.

Bei einer bevorzugten Ausführungsform ist das Filterelement lösbar am Deckel gehaltert. Das Filterelement kann von dem Deckel abgezogen, gereinigt und wieder aufgesetzt werden. Das Filterelement kann dabei in weiter bevorzugter Weise einen Griff aufweisen, womit ein Lösen von dem Deckel vereinfacht sein kann. Eine Abmessung oder Innendurchmesser des Filterelements kann derart an den Deckel angepasst sein, dass das Filterelement mit einer Übergangs- oder leichten Presspassung an dem Deckel gehaltert ist, um bspw. bei einem Kippen des Schmutzwassertanks zu Wartungszwecken ein Verlieren zu verhindern. Diese Ausführungsform ist besonders einfach zu montieren und/oder zu warten.

Der Grundkörper einer weiteren bevorzugten Ausführungsform weist einen sich nach außen wegerstreckenden umlaufenden Flansch auf, an dem der Schwimmerkörper anliegt, wenn der Schwimmerkörper in der Offenstellung ist, und das Filterelement erstreckt sich bis zu dem Flansch. Der Flansch kann beim mechanischen Verbinden des Filterelements, insbesondere nach einem Reinigungsvorgang, als Anschlag dienen. Zudem kann der Flansch verhindern, dass ein Teilstrom des Saugluftstroms unter Umgehen des Filterelements in den Ringraum gelangt.

Der Flansch kann in weiter bevorzugter Weise wenigstens eine Öffnung bzw. Flanschöffnung aufweisen, die durch den Schwimmerkörper verschlossen ist, wenn der Schwimmerkörper in der Offenstellung ist, und die freigegeben ist, wenn der Schwimmerkörper aus der Offenstellung hin zu der Verschlussstellung verlagert ist. Diese Flanschöffnung kann einen weiteren Strömungskanal in den Ringraum bieten, und eine Strömung durch diese Flanschöffnung kann ein Überführen des Schwimmerkörpers in die Verschlussstellung erleichtern. Insbesondere wenn das Filterelement zunehmend verschmutzt ist, oder wenn sich im Schmutzwassertank Schaum bildet, dann kann die Flanschöffnung die Schutzwirkung durch die Filtereinheit erhöhen. Diese Ausführungsform kann ermöglichen, dass bei einem verstopften Filterelement Luft durch die Flanschöffnung strömen und diese Luft den Schwimmerkörper in seine Verschlussstellung drängen kann. Schließlich ermöglicht die Flanschöffnung zusätzlich, dass sich in dem Schmutzwassertank möglicherweise befindender Schaum den Schwimmerkörper auch in Richtung der Verschlussstellung bewegt. Auf diese Weise wird somit erreicht, dass auch Schaum, der sich oberhalb des Schmutzwasserpegels bildet und eine Gefahr für die Saugturbine darstellen würde, zu einem Verschluss der Eingangsöffnung durch den Schwimmerkörper führt, was die Saugturbine schützt und einem Benutzer wiederum angezeigt wird.

Der Grundkörper einer weiteren bevorzugten Ausführungsform weist im Bereich der Eintrittsöffnung wenigstens ein Rastelement, vorzugsweise wenigstens einen Rasthaken, auf. Das wenigstens eine Rastelement ist ausgestaltet, mit wenigstens einem Eingriffselement an dem Saugstutzen einzugreifen. Der Grundkörper und der Deckel sind derart ausgestaltet, dass dann, wenn das wenigstens eine Rastelement mit dem Eingriffselement in Eingriff ist, eine Fluidverbindung zwischen der Eintrittsöffnung und dem Saugstutzen vorgesehen ist. Der Grundkörper und der Deckel können derart ausgestaltet sein, dass dann, wenn das wenigstens eine Rastelement mit dem Eingriffselement des Saugstutzens in Eingriff ist, ein Fluid durch die Eingangsöffnung des Deckels und durch die Eintrittsöffnung des Grundkörpers in den Saugstutzen strömen kann. Bei dieser Ausführungsform kann die Filtereinheit einfach an einem Saugstutzen angebracht werden.

In weiter bevorzugter Weise kann ein Verriegelungskörper vorgesehen sein, wobei der Verriegelungskörper einen zylindrischen Abschnitt aufweist und wobei der zylindrische Abschnitt in die Eingangsöffnung eingesetzt und ausgestaltet ist, einem Außereingriffbringen des Rastelements von dem Saugstutzen entgegenzuwirken. Bei dieser Ausführungsform ist der Grundkörper nach dem Einsetzen des Verriegelungsköpers fest mit dem Ansaugstutzen verbunden. Zudem kann der Verriegelungskörper Undichtigkeiten zwischen Grundkörper und Ansaugstutzen entgegenwirken.

Der Verriegelungskörper kann in einer besonders bevorzugten Ausführungsform einen umlaufenden Bund aufweisen, der sich über den Grundkörper hinaus in den Ringraum erstreckt. Der Schwimmerkörper kann in der Verschlussstellung an dem Bund anliegen. Der Bund kann dazu beitragen, die Verschlussstellung zu definieren. Der Deckel kann mit dem ersten Stirnende des Grundkörpers mechanisch verbunden sein und dabei den Bund des Verriegelungskörpers einklemmen.

Der Deckel und das Grundkörper können in einer bevorzugten Ausführungsform voneinander getrennte Bauteile sein, wobei der Verriegelungskörper, insbesondere dessen Bund, zwischen dem Deckel und dem Grundkörper angeordnet ist. Bei dieser Ausführungsform kann die Montage der Filtereinheit in der Weise erfolgen, dass zunächst der Grundkörper auf den Ansaugstutzen aufgesetzt wird, wobei die Rastelemente mit dem Ansaugstutzen eingreifen. Anschließend wird der Verriegelungskörper in die Eintrittsöffnung des Grundkörpers eingesetzt, sodass die Rastelemente daran gehindert sind, sich von dem Ansaugstutzen zu lösen, und der Grundkörper damit an dem Ansaugstutzen verriegelt ist. Daraufhin wird der Deckel an dem Grundkörper befestigt, sodass dann der Verriegelungskörper nicht mehr von dem Grundkörper gelöst werden kann. Nun kann der Grundkörper nur noch dann von dem Ansaugstutzen gelöst werden, wenn zuvor der Deckel entfernt und dann der Verriegelungskörper aus der Eintrittsöffnung entnommen wird. Damit ermöglicht dieser Aufbau in einfacher Weise, den Grundkörper sicher an dem Ansaugstutzen zu befestigen. Ferner sichert der Bund des Verriegelungskörpers den Schwimmerkörper gegen Trennen vom Grundkörper und Verlieren, wenn das Filterelement beispielsweise zum Reinigen von Deckel und Grundkörper abgezogen ist.

In einer weiteren bevorzugten Ausführungsform ist ein elastisches Ringelement vorgesehen, das an einer der dem Deckel abgewandten Fläche des Grundkörpers anliegt, wobei der Ringkörper vorgesehen ist, an dem Saugstutzen anzuliegen. Diese Ausführungsform ist gegenüber Vibrationen während des Betriebs der Bodenreinigungsmaschine widerstandsfähiger. Das elastische Ringelement kann außerdem dazu dienen, Fertigungstoleranzen insbesondere des Grundkörpers und des Saugstutzens auszugleichen. Ferner verhindert das elastische Ringelement Undichtigkeiten, insbesondere zwischen dem Saugstutzen und dem Grundkörper

Eine weitere bevorzugte Ausführungsform zeichnet sich dadurch aus, dass das Filterelement eine siebförmige Umfangsfläche aufweist. Dadurch kann das Reinigen des Filterelements vereinfacht sein.

Bei einer anderen Ausführungsform weist der Grundkörper einen rohrförmigen Abschnitt aufweist, um welchen der Schwimmerkörper angeordnet werden kann, wobei der rohrförmige Abschnitt über einen Saugstutzen einer Bodenreinigungsmaschine gestülpt werden kann. Dieser Grundkörper kann einfach relativ zum Saugstutzen angeordnet und zentriert werden.

Gemäß einem weiteren Aspekt der vorliegenden Erfindung wird die obige Aufgabe gelöst durch eine Bodenreinigungsmaschine, insbesondere Scheuersaugmaschine, mit einen Schmutzwassertank, einem sich in den Schmutzwassertank erstreckenden Saugstutzen, einer mit einem von dem Schmutzwassertank entfernten Ende des Saugstutzens fluidleitend verbundenen Saugturbine zum Erzeugen von Unterdruck in dem Schmutzwassertank, einer in dem Schmutzwassertank endenden Saugleitung, die mit einer Einrichtung zur Aufnahme von Flüssigkeit durch Unterdruck von einer zu reinigenden Bodenfläche verbunden ist. Bei dieser Bodenreinigungsmaschine ist eine der zuvor beschriebenen Filtereinheiten vorgesehen, die mit dem in dem Schmutzwassertank angeordneten Ende des Saugstutzens mechanisch verbunden ist.

Insbesondere kann die erfindungsgemäße Bodenreinigungsmaschine bzw. die Scheuersaugmaschine ein Fahrwerk aufweisen, mit dem diese über eine zu reinigenden Bodenfläche bewegt werden kann, wobei in weiter bevorzugter Weise eine Reinigungseinrichtung an der Maschine vorgesehen ist, die mit der zu reinigenden Bodenfläche in Eingriff gelangen kann und mit der Reinigungsflüssigkeit auf die Bodenfläche aufgebracht werden kann.

In diesem Zusammenhang ist darauf hinzuweisen, dass die vorliegende Erfindung sowohl bei selbstfahrenden Bodenreinigungsmaschine oder Scheuersaugmaschinen, bei denen ein Benutzer auf der Maschine mitfährt, als auch bei Maschinen Anwendung finden kann, bei denen ein Benutzer vor der Maschine oder hinter der Maschine her läuft.

Die Bodenreinigungsmaschine kann einen Stromfühler aufweisen, der die Stromstärke des von der Saugturbine aufgenommen elektrischen Stroms erfassen kann.

Während des Betriebs dieser Bodenreinigungsmaschine kann der Füllstand im Schmutzwassertank einen Maximalwert überschreiten, im Schmutzwassertank kann sich ein unerwünschtes Volumen von Schaum ausbilden und/oder das Filterelement der Filtereinheit kann zunehmend verstopfen. In diesen Fällen kann der Schwimmerkörper, insbesondere wegen der Öffnung im Flansch des Grundkörpers, die Verschlussstellung einnehmen und ein unerwünschtes Eintreten von Flüssigkeit in die Saugturbine verhindern. Mit Einnehmen der Verschlussstellung ändert sich die Stromaufnahme der Saugturbine und insbesondere kann die Stromänderung in einer Strom-Zeit-Kurve als ein Knick bzw. als eine Unstetigkeit erkennbar sein. Aufgrund dieser Stromänderung kann einem Benutzer ein Signal angezeigt werden, und auf dieses Signal hin sollte ein Benutzer die Bodenreinigungsmaschine warten, d. h. den Filter reinigen und/oder den Schmutzwassertank leeren. Es ist aber auch denkbar, dass durch einen Schalter oder einen berührungslosen Sensor detektiert wird, ob der Schwimmerkörper in der Verschlussstellung ist. Auch hier kann dann ein entsprechendes Signal erzeugt werden, dass dem Benutzer den Verschluss anzeigt.

Nachfolgend wird die vorliegende Erfindung anhand einer lediglich ein bevorzugtes Ausführungsbeispiel zeigenden Zeichnung erläutert, wobei
- Figur 1: eine Scheuersaugmaschine mit einem Ausführungsbeispiel einer erfindungsgemäßen Filtereinheit im Längsschnitt zeigt
- Figur 2: das Ausführungsbeispiel einer erfindungsgemäßen Filtereinheit im Querschnitt zeigt und
- Figur 3: das Ausführungsbeispiel aus Figur 2 in einer perspektivischen Darstellung zeigt.

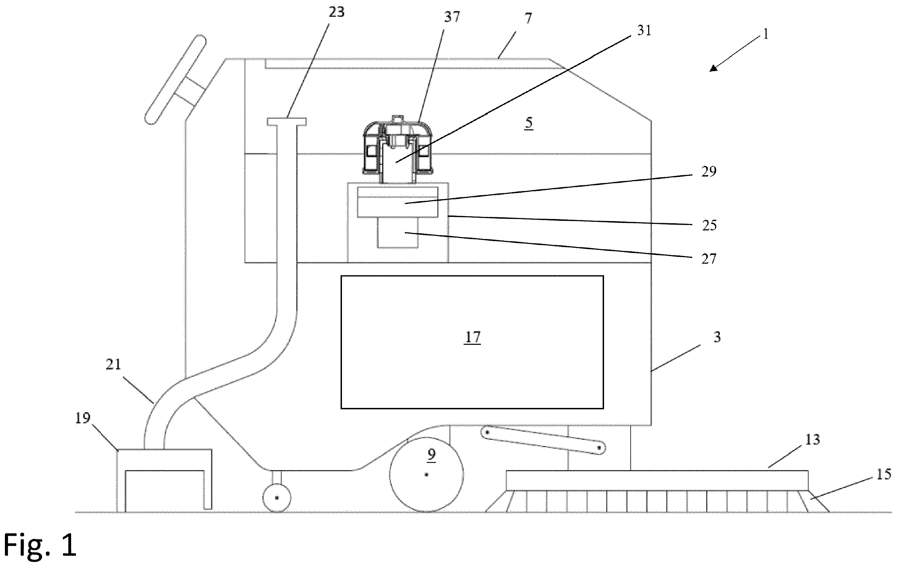

Die Figur 1 zeigt als Ausführungsform einer Bodenreinigungsmaschine eine Scheuersaugmaschine 1, die in deren Gehäuse 3 einen Schmutzwassertank 5 aufweist, der von einem Deckelelement 7, das schwenkbar am Gehäuse 3 gehaltert ist, verschlossen werden kann. Des Weiteren ist die Bodenreinigungsmaschine 1 mit einem Räder 9 aufweisenden Fahrwerk versehen, sodass die Scheuersaugmaschine 1 über eine zu reinigenden Bodenfläche 11 bewegt werden kann. Wie weiter der Figur 1 zu entnehmen ist, ist an dem Gehäuse 3 ein Bürstenkopf 13 höhenverstellbar angebracht, wobei der Bürstenkopf 13 in dem hier gezeigten bevorzugten Ausführungsbeispiel drehend angetriebene Bürstenelemente 15 aufweist, die mit der zu reinigenden Bodenfläche 11 eingreifen können, um Schmutz davon zu lösen, wobei während des Reinigungsvorgangs Reinigungsflüssigkeit aus einem ebenfalls in dem Gehäuse 3 vorgesehenen Frischwassertank 17 (schematisch dargestellt) auf die zu reinigenden Bodenfläche 11 aufgebracht wird.

Wie ferner Figur 1 zu entnehmen ist, ist bei dem hier beschriebenen Ausführungsbeispiel an dem Gehäuse 3 der Bodenreinigungsmaschine ein Saugfuß 19 angebracht, der als Aufnahmeeinrichtung für auf der zu reinigenden Bodenfläche 11 vorhandene Reinigungsflüssigkeit dient. Der Saugfuß 19 ist in an sich bekannterweise derart ausgestaltet, dass er zwei voneinander beabstandete Dichtlippen aufweist, die im Reinigungsbetrieb mit einer Kante auf der zu reinigenden Bodenfläche 11 aufliegen, wobei die in Fahrtrichtung weisenden Dichtlippe Eintrittsschlitze aufweist, sodass zuvor aufgebrachte Reinigungsflüssigkeit in den Bereich zwischen den Dichtlippen eindringen kann. Der Bereich zwischen den Dichtlippen ist über eine Saugleitung 21 und einen Eintrittsstutzen 23 mit dem Schmutzwassertank 5 verbunden, wobei der Eintrittsstutzen 23 in den Schmutzwassertank 5 hineinragt.

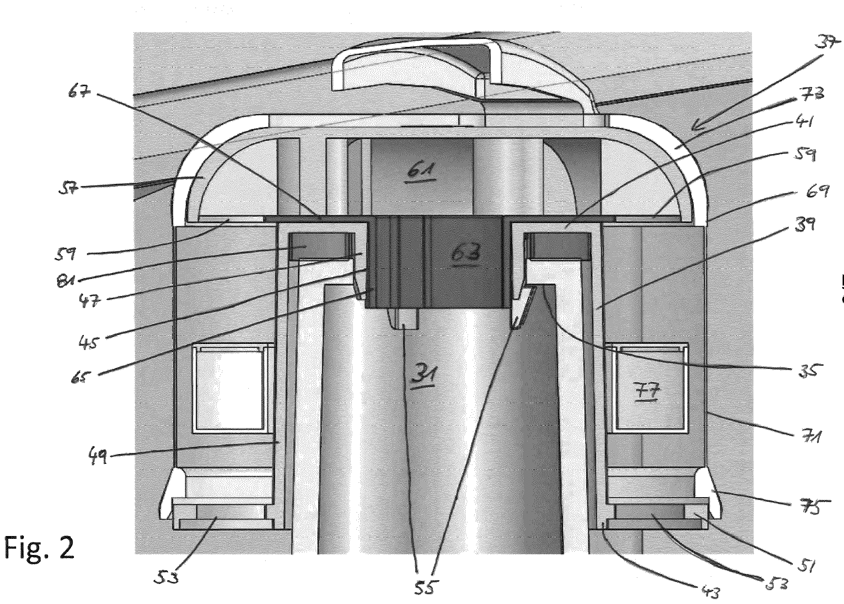

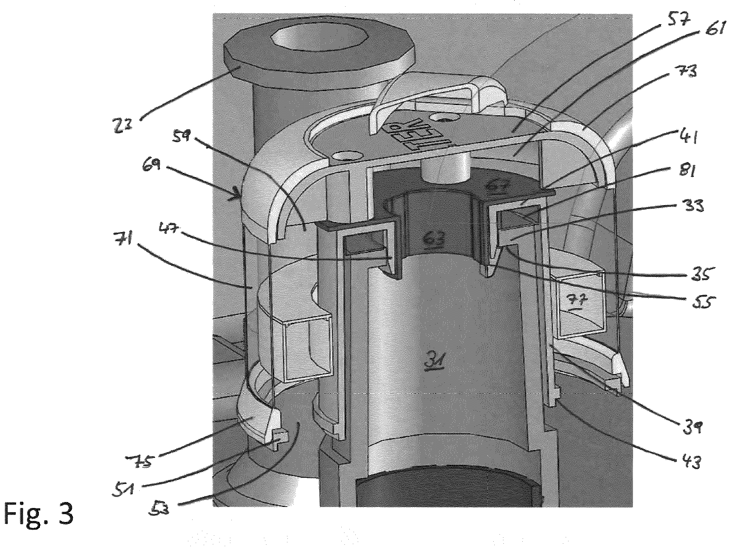

Weiterhin weist die Scheuersaugmaschine 1 in dem Gehäuse 3 eine Saugturbine 25 auf, die einen Antriebsmotor 27 sowie ein damit angetriebenes Lüfterrad 29 aufweist (schematisch dargestellt), wobei der Eintritt der Saugturbine 25 über einen Saugstutzen 31 mit dem Inneren des Schmutzwassertanks 5 verbunden ist, wobei das freie Ende 33 des Saugstutzens 31 mit einer Hinterschneidung 35 versehen ist (siehe Figuren 2 und 3). Dabei bildet die Hinterschneidung 35 ein Eingriffselement.

An dem Saugstutzen 31 an dessen freiem Ende 33 ist ein Ausführungsbeispiel einer erfindungsgemäßen Filtereinheit 37 angebracht, die in Figur 2 und 3 im Detail dargestellt ist.

Die Filtereinheit 37 weist einen Grundkörper 39 auf, der bei dem hier gezeigten bevorzugten Ausführungsbeispiel zylindrisch und hülsenförmig aufgebaut ist und den oberen Teil des Saugstutzens 31 umgibt, wobei sich der Grundkörper 39 zwischen einem ersten Stirnende 41 und einem zweiten Stirnende 43 erstreckt. Weiterhin weist der Grundkörper 39 an dem ersten Stirnende 41 eine Eintrittsöffnung 45 auf, wobei im Bereich der Eintrittsöffnung 45 ein Kragen 47 vorgesehen ist, der in den Eintrittsstutzen 31 hineinragt, sodass sich der Kragen 47 im Wesentlichen parallel zu einer einen rohrförmigen Abschnitt bildenden Außenwandung 49 des Grundkörpers 39 erstreckt. Weiterhin weist der Grundkörper 39 im Bereich des zweiten Stirnendes 43 einen umlaufenden Flansch 51 auf, der sich nach außen von der Außenwandung 49 weg erstreckt und in dem Flanschöffnungen 53 vorgesehen sind. Des Weiteren ist in den Figuren 2 und 3 zu erkennen, dass im Bereich des ersten Stirnendes 41 an der Eintrittsöffnung 45 Rasthaken 55 vorgesehen sind, die, wenn der Grundkörper 39 auf den Saugstutzen 31 aufgesetzt ist, mit der Hinterschneidung 35 eingreifen, sodass dann der Grundkörper 39 daran gehindert ist, von dem Saugstutzen 31 abgezogen zu werden.

Außerdem weist die Filtereinheit 37 einen Deckel 57 auf, der an dem Grundkörper 39 auf der von dem Saugstutzen 31 wegweisenden Seite des ersten Stirnendes 41 befestigt ist, wobei in dem Deckel 57 eine in diesem bevorzugten Ausführungsbeispiel umlaufende Eingangsöffnung 59 vorgesehen ist und der Deckel 57 zudem derart ausgestaltet ist, dass in ihm ein Fluidkanal 61 vorgesehen ist, über den die Eingangsöffnung 59 mit der Eintrittsöffnung 45 in dem Grundkörper 39 verbunden ist, sodass ein Fluid wie Luft durch die Eingangsöffnung 59 in den Fluidkanal 61 eintreten und durch die Eintrittsöffnung 45 dann in den Saugstutzen 31 gelangen kann.

Ferner weist die Filtereinheit 37 einen Verriegelungskörper 63 auf, der einen zylindrischen Abschnitt 65 umfasst, der derart ausgestaltet ist, dass er in die Eintrittsöffnung 45 und den Kragen 47 des Grundkörpers 39 so eingesetzt werden kann, dass er die Rasthaken 55 daran hindert, nach innen zu schwenken, und so außer Eingriff mit der Hinterschneidung 35 gebracht würden. Dadurch verhindert der zylindrische Abschnitt 65, dass der Grundkörper 39 von dem Saugstutzen 31 gelöst werden kann. Außerdem ist an dem Verriegelungskörper 63 ein Bund 67 vorgesehen, der sich entlang des ersten Stirnendes 41 des Grundkörpers 39 und darüber hinaus nach außen erstreckt. Der Verriegelungskörper 63 ist dabei zwischen dem Grundkörper 39 bzw. dessen erstem Stirnende 41 und dem Deckel 57 eingeklemmt.

Außerdem weist die Filtereinheit 37 ein hülsenförmiges Filterelement 69 auf, dessen eine Umfangsfläche bildender zylindrischer Abschnitt 71 aus einem siebförmigen Filtermaterial gebildet ist und das außerdem einen Kupplungsabschnitt 73 aufweist, der über den Deckel 57 geschoben ist, wobei zwischen dem Deckel 57 und dem Kupplungsabschnitt 73 eine Presspassung vorliegt, sodass das Filterelement 69 nicht ohne weiteres von dem Deckel 57 abgezogen werden kann. Der zylindrische Abschnitt 71 aus dem Filtermaterial erstreckt sich bis zu dem umlaufenden Flansch 51 an dem Grundkörper 39, wobei an dem zylindrischen Abschnitt 71 an dessen von dem Kupplungsabschnitt 73 entfernten Ende ein Ring 75 vorgesehen ist, der mit dem umlaufenden Flansch 51 eingreift.

Darüber hinaus weist die Filtereinheit 37 einen im Wesentlichen ringförmigen Schwimmerkörper 77 auf, der um den Grundkörper 39 und insbesondere dessen Außenwandung 49 herum angeordnet ist, wobei der Schwimmerkörper 77 zwischen einer Verschlussstellung und einer Offenstellung entlang des Grundkörpers 39 bzw. dessen Außenwanderung 49 der verlagerbar ist. Wenn der Schwimmerkörper 77 in der Verschlussstellung ist, liegt er an dem Bund 67 des Verriegelungskörpers 63 an und verschließt die Eingangsöffnung 59 in dem Deckel 57, während er in der Offenstellung am unteren Ende an dem umlaufenden Flansch 51 des Grundkörpers 39 anliegt und die darin vorgesehenen Flanschöffnungen 53 verschließt. Damit bewegt sich der Schwimmerkörper 77 innerhalb eines zwischen dem Filterelement 69, 71 und dem Grundkörper 39 ausgebildeten Ringraums 79. Der Schwimmerkörper 77 ist dabei derart ausgebildet, dass dann, wenn der Pegel in dem Schmutzwassertank 5 steigt, der Schwimmerkörper 77 entlang des Grundkörpers 39 hin zu dem Bund 67 des Verriegelungskörpers 63 und der Eingangsöffnung 59 des Deckels 57 verlagert wird.

Schließlich ist bei dem hier beschriebenen bevorzugten Ausführungsbeispiel ein elastisches Ringelement 81 zwischen dem freien Ende 33 des Saugstutzens 31 und dem Grundkörper 39 vorgesehen, das, wenn die Rasthaken 55 mit der Hinterschneidung 35 eingreifen, leicht komprimiert wird. Dadurch wird verhindert, dass die Filtereinheit 37 durch Vibrationen beschädigt wird oder sich von dem Saugstutzen löst. Außerdem werden durch das elastische Ringelement 81 Fertigungstoleranzen ausgeglichen. Ferner kann das elastische Ringelement 81 abdichtend wirken.

Das Ausführungsbeispiel der erfindungsgemäßen Filtereinheit 37 kann in folgender Weise an dem Saugstutzen 31 der Scheuersaugmaschine 1 montiert werden. Zunächst werden das elastische Ringelement 81 und der Grundkörper 39 auf den Saugstutzen 31 aufgesetzt, wobei die Rasthaken 55 mit der Hinterschneidung 35 in Eingriff gebracht werden. Anschließend wird der Schwimmerkörper 77 auf den Grundkörper 39 aufgeschoben, wobei der Schwimmerkörper 77 den Grundkörper 39 bzw. dessen Außenwandung 49 umgibt. Anschließend wird der Verriegelungskörper 63 in die Eintrittsöffnung 45 eingesetzt und verriegelt die Rasthaken 55 in der Eingriffsstellung. Außerdem wird durch die Montage des Verriegelungskörpers der korrekte Eingriff der Rasthaken sichergestellt. Durch den Bund 67 wird zudem erreicht, dass der Schwimmerkörper 77 nicht mehr abgenommen werden kann. Daraufhin wird der Deckel 57 auf dem Grundkörper 39 befestigt, wobei der Verriegelungskörper 63 dadurch eingeklemmt wird. Schließlich kann das Filterelement 69 über die zuvor montierte Anordnung geschoben werden, wobei die Presspassung zwischen Deckel 57 und Kupplungsabschnitt 73 ein einfaches Lösen des Filterelements 69 verhindert.

Im Betrieb der Scheuersaugmaschine 1 wird mit Schmutzwasser und Schmutz beladene Luft mittels der Saugturbine 25 von dem Saugfuß 19 durch die Saugleitung 21 und den Eintrittsstutzen 23 in den Schmutzwassertank 5 gesaugt, wobei die Luft durch den zylindrischen Abschnitt 71 des Filterelements 69 hindurchtritt und dann weiter durch die Eingangsöffnung 59 und die Eintrittsöffnung 45 hin zu der Saugturbine strömen kann, wobei Schmutzpartikel an dem zylindrischen Abschnitt 71 abgeschieden werden. Wenn der Schmutzwasserpegel in dem Schmutzwassertank 5 steigt, bewegt sich der Schwimmerkörper 77 aus der in Figur 5 gezeigten Stellung weiter nach oben, bis er bei einem bestimmten Pegelstand so nah an der Eingangsöffnung 59 des Deckels 57 ist, dass er aufgrund der Luftströmung gegen den Bund 67 des Verriegelungskörpers 63 gezogen wird und die Eingangsöffnung 59 verschließt. In diesem Fall ändert sich die Stromaufnahme der Saugturbine, und einem Benutzer wird angezeigt, dass der Schmutzwasserpegel in dem Schmutzwassertank 5 so hoch ist, dass der Tank geleert werden muss.

Die Flanschöffnungen 53 in dem umlaufenden Flansch 51 des Grundkörpers 39 ermöglichen zudem, dass Schaum in den Ringraum 79 eintreten kann, was ebenfalls, auch wenn der Schmutzwasserpegel an sich noch auf einem niedrigeren Niveau ist, bewirkt, dass der Schwimmerkörper 77 nach oben bewegt wird, sodass ebenfalls die Eintrittsöffnung 59 verschlossen wird, wodurch dann dem Benutzer angezeigt wird, dass er den Schmutzwassertank 5 leeren muss.

Wenn der zylindrische Abschnitt 71 des Filterelements 69 hinreichend verschmutzt ist, kann Luft nur noch in geringem Maße durch diesen Abschnitt hindurch gelangen, was dann dazu führt, dass der Schwimmerkörper 77 aufgrund einer Luftströmung durch die Flanschöffnungen 53 hin zu den Eingangsöffnung 59 gezogen wird und diese verschließt. In diesem Fall muss ein Benutzer das Filterelement 69 reinigen, wobei er lediglich den Kupplungsabschnitt 73 von dem Deckel 57 abziehen muss. Dabei ist es jedoch nicht möglich, dass der Schwimmerkörper 57 gelöst wird, weil dieser weiterhin zwischen dem umlaufenden Flansch 51 und dem Bund 67 eingeklemmt ist.

Die Filtereinheit 37 kann damit in einfacher Weise montiert und auch gereinigt werden, wobei bei der Reinigung der Filtereinheit 37 und insbesondere bei dem Entfernen des Filterelements 69 insbesondere wegen des Verriegelungskörpers 63 nicht die Gefahr besteht, dass der Schwimmerkörper 77 verloren geht. Außerdem ist der Aufbau der Filtereinheit 37 sehr kompakt, da die Filtereinheit lediglich um den Saugstutzen 31 herum angeordnet ist und damit relativ wenig Raum in dem Schmutzwassertank 5 einnimmt.

### Bezugszeichen:

- 1: Scheuersaugmaschine
- 3: Gehäuse
- 5: Schmutzwassertank
- 7: Deckelelement
- 9: Rad
- 11: Bodenfläche
- 13: Bürstenkopf
- 15: Bürstenelement
- 17: Frischwassertank
- 19: Saugfuß
- 21: Saugleitung
- 23: Eintrittsstutzen
- 25: Saugturbine
- 27: Antriebsmotor
- 29: Lüfterrad
- 31: Saugstutzen
- 33: freies Ende
- 35: Hinterschneidung
- 37: Filtereinheit
- 39: Grundkörper
- 41: erstes Stirnende
- 43: zweites Stirnende
- 45: Eintrittsöffnung
- 47: Kragen
- 49: Außenwandung
- 51: umlaufender Flansch
- 53: Flanschöffnung
- 55: Rasthaken
- 57: Deckel
- 59: Eingangsöffnung
- 61: Fluidkanal
- 63: Verriegelungskörper
- 65: zylindrische Abschnitt
- 67: Bund
- 69: Filterelement
- 71: zylindrische Abschnitt
- 73: Kupplungsabschnitt
- 75: Ring
- 77: Schwimmerkörper
- 79: Ringraum
- 81: elastisches Ringelement

## Patentansprüche

1. Filtereinheit (37), für einen Saugstutzen (31) einer Bodenreinigungsmaschine (1), insbesondere einen Saugstutzen (31) im Schmutzwassertank (5) der Bodenreinigungsmaschine (1), mit
einem im Wesentlichen hülsenförmigen Grundkörper (39), der sich zwischen einem ersten Stirnende (41) und einem zweiten Stirnende (43) erstreckt und an dem ersten Stirnende (41) eine Eintrittsöffnung (45) aufweist,
einem im Wesentlichen ringförmigen Schwimmerkörper (77), der um den Grundkörper (39) angeordnet und entlang des Grundkörpers (39) zwischen einer Verschlussstellung und einer Offenstellung verlagerbar ist,
einem Deckel (57), der an dem ersten Stirnende (des Grundkörpers angeordnet ist,
wobei der Deckel (57) wenigstens eine Eingangsöffnung (59) aufweist, die ausgestaltet ist, dass sie von dem Schwimmerkörper (77) verschlossen ist, wenn dieser in der Verschlussstellung ist, und die geöffnet ist, wenn der Schwimmerkörper (77) von der Verschlussstellung beabstandet ist, **dadurch gekennzeichnet, dass**
in dem Deckel (57) ein Fluidkanal (61) vorgesehen ist, der ausgestaltet ist, dass ein Fluid von der Eingangsöffnung (59) in die Eintrittsöffnung (45) strömen kann, und
einem hülsenförmigen Filterelement (69), das derart um den Grundkörper (39) angeordnet ist, dass zwischen dem Grundkörper (39) und dem Filterelement (69) ein Ringraum (79) gebildet ist, in dem der Schwimmerkörper (77) zwischen der Verschlussstellung und der Offenstellung verlagerbar angeordnet ist,
wobei das Filterelement (69) zumindest teilweise aus einem Filtermaterial (71) gebildet ist, sodass ein Fluid durch das Filtermaterial (71) hindurchtreten kann, während in dem Fluid enthaltene Partikel an dem Filtermaterial (71) abgeschieden werden.

2. Filtereinheit (37) nach Anspruch 1, wobei das Filterelement (69) lösbar am Deckel (57) gehaltert ist.

3. Filtereinheit (37) nach Anspruch 1 oder 2, wobei der Grundkörper (39) einen sich nach außen wegerstreckenden umlaufenden Flansch (51) aufweist, an dem der Schwimmerkörper (77) anliegt, wenn der Schwimmerkörper (77) in der Offenstellung ist, und
wobei sich das Filterelement (69) bis zu dem Flansch (51) erstreckt.

4. Filtereinheit (37) nach Anspruch 3, wobei der Flansch (51) wenigstens eine Flanschöffnung (53) aufweist, die durch den Schwimmerkörper (77) verschlossen ist, wenn der Schwimmerkörper (77) in der Offenstellung ist, und die freigegeben ist, wenn der Schwimmerkörper (77) aus der Offenstellung hin zu der Verschlussstellung verlagert ist.

5. Filtereinheit (37) nach einem oder mehreren der Ansprüche 1 bis 4, wobei der Grundkörper (12) im Bereich der Eintrittsöffnung (45) wenigstens ein Rastelement, vorzugsweise wenigstens einen Rasthaken (55), aufweist,
wobei das wenigstens eine Rastelement (55) ausgestaltet ist, mit wenigstens einem Eingriffselement (35) an dem Saugstutzen (31) einzugreifen, und
wobei der Grundkörper (39) und der Deckel (57) derart ausgestaltet sind, dass dann, wenn das wenigstens eine Rastelement (55) mit dem Eingriffselement (35) in Eingriff ist, eine Fluidverbindung zwischen der Eingangsöffnung (59) und dem Saugstutzen (31) vorgesehen ist.

6. Filtereinheit (37) nach Anspruch 5, mit einem Verriegelungskörper (63), der einen zylindrischen Abschnitt (65) aufweist,
wobei der zylindrische Abschnitt (65) in die Eintrittsöffnung (45) eingesetzt und ausgestaltet ist, einem Außereingriffbringen des wenigstens einen Rastelements (55) von dem Saugstutzen (31) entgegenzuwirken.

7. Filtereinheit (4) nach Anspruch 6, wobei der Verriegelungskörper (63) einen Bund (67) aufweist, der sich über den Grundkörper (79) hinaus in den Ringraum (79) erstreckt,
wobei der Schwimmerkörper (77) an dem Bund (67) anliegt, wenn der Schwimmerkörper (77) in der Verschlussstellung ist.

8. Filtereinheit (4) nach Anspruch 6 oder 7, wobei der Deckel (57) und der Grundkörper (39) voneinander getrennte Bauteile sind und
wobei der Verriegelungskörper (63) zwischen dem Deckel (57) und dem Grundkörper (39) angeordnet ist.

9. Filtereinheit (37) nach einem oder mehreren der Ansprüche 1 bis 8, mit einem elastischen Ringelement (81), das an einer dem Deckel (57) abgewandten Fläche des Grundkörpers (39) anliegt und das vorgesehen ist, an dem Saugstutzen (31) anzuliegen.

10. Filtereinheit (37) nach einem oder mehreren der Ansprüche 1 bis 9, wobei das Filterelement (69) eine siebförmige Umfangsfläche aufweist.

11. Filtereinheit (37) nach einem oder mehreren der Ansprüche 1 bis 10, wobei der Grundkörper (39) einen rohrförmigen Abschnitt (49) aufweist, um welchen der Schwimmerkörper (77) angeordnet ist,
wobei der rohrförmige Abschnitt (49) über einen Saugstutzen (31) einer Bodenreinigungsmaschine (1) gestülpt werden kann.

12. Bodenreinigungsmaschine (1) mit einen Schmutzwassertank (5),
einem sich in den Schmutzwassertank (5) erstreckenden Saugstutzen (31),
einer mit einem von dem Schmutzwassertank (5) entfernten Ende des Saugstutzens (31) fluidleitend verbundenen Saugturbine (25) zum Erzeugen von Unterdruck in dem Schmutzwassertank (5),
einer in dem Schmutzwassertank (5) endenden Saugleitung (21, 23), die mit einer Einrichtung (19) zur Aufnahme von Flüssigkeit durch Unterdruck von einer zu reinigenden Bodenfläche (11) verbunden ist,
wobei eine Filtereinheit (37) nach einem oder mehreren der Ansprüche 1 bis 11 vorgesehen ist, die mit dem in dem Schmutzwassertank (5) angeordneten freien Ende (33) des Saugstutzens (31) mechanisch verbunden ist.

## Claims

1. A filter unit (37), for a suction fitting (31) of a floor cleaning machine (1), in particular a suction fitting (31) in the dirty water tank (5) of the floor cleaning machine (1), having
a substantially sleeve-shaped base body (39), which extends between a first front end (41) and a second front end (43) and has an inlet opening (45) at the first front end (41),
a substantially annular float body (77), which is arranged around the base body (39) and can be displaced along the base body (39) between a closed position and an open position,
a cover (57), which is arranged at the first front end of the base body,
wherein the cover (57) has at least one entry opening (59), which is designed to be closed by the float body (77) when the latter is in the closed position, and which is open when the float body (77) is spaced from the closed position, **characterized in that** a fluid channel (61) is provided in the cover (57), which is designed such that a fluid can flow from the entry opening (59) into the inlet opening (45), and
a sleeve-shaped filter element (69), which is arranged around the base body (39) in such a way that an annular space (79) is formed between the base body (39) and the filter element (69), in which the float body (77) is arranged displaceably between the closed position and the open position,
wherein the filter element (69) is at least partially formed from a filter material (71), such that a fluid can pass through the filter material (71) while particles contained in the fluid are deposited on the filter material (71).

2. The filter unit (37) according to claim 1, wherein the filter element (69) is detachably mounted on the cover (57).

3. The filter unit (37) according to claim 1 or 2, wherein the base body (39) has an outwardly extending circumferential flange (51) against which the float body (77) rests when the float body (77) is in the open position, and
wherein the filter element (69) extends to the flange (51).

4. The filter unit (37) according to claim 3, wherein the flange (51) has at least one flange opening (53), which is closed by the float body (77) when the float body (77) is in the open position, and which is opened when the float body (77) is displaced from the open position to the closed position.

5. The filter unit (37) according to one or more of claims 1 to 4, wherein the base body (12) has at least one latching element, preferably at least one latching hook (55), in the area of the inlet opening (45),
wherein the at least one latching element (55) is designed to engage with at least one engagement element (35) on the suction fitting (31), and
wherein the base body (39) and the cover (57) are designed such that, when the at least one latching element (55) is in engagement with the engagement element (35), a fluid connection is provided between the entry opening (59) and the suction fitting (31).

6. The filter unit (37) according to claim 5, having a locking body (63) which has a cylindrical section (65),
wherein the cylindrical section (65) is inserted into the inlet opening (45) and is designed to counteract the disengagement of the at least one latching element (55) from the suction fitting (31).

7. The filter unit (4) according to claim 6, wherein the locking body (63) has a collar (67) which extends beyond the base body (79) into the annular space (79),
wherein the float body (77) rests on the collar (67) when the float body (77) is in the closed position.

8. The filter unit (4) according to claim 6 or 7, wherein the cover (57) and the base body (39) are separate components, and
wherein the locking body (63) is arranged between the cover (57) and the base body (39).

9. The filter unit (37) according to one or more of claims 1 to 8, having an elastic ring element (81), which rests on a surface of the base body (39) facing away from the cover (57), and which is intended to rest on the suction fitting (31).

10. The filter unit (37) according to one or more of claims 1 to 9, wherein the filter element (69) has a sieve-shaped peripheral surface.

11. The filter unit (37) according to one or more of claims 1 to 10, wherein the base body (39) has a tubular section (49) around which the float body (77) is arranged,
wherein the tubular section (49) can be placed over a suction fitting (31) of a floor cleaning machine (1).

12. A floor cleaning machine (1) having a dirty water tank (5),
a suction fitting (31) extending into the dirty water tank (5),
a suction turbine (25) connected in a fluid-conducting manner to an end of the suction fitting (31) remote from the dirty water tank (5) for generating negative pressure in the dirty water tank (5),
a suction line (21, 23) ending in the dirty water tank (5), which is connected to a device (19) for receiving liquid by suction from a floor surface (11) to be cleaned,
wherein a filter unit (37) according to one or more of claims 1 to 11 is provided, which is mechanically connected to the free end (33) of the suction fitting (31) arranged in the dirty water tank (5).

## Revendications

1. Unité filtrante (37), pour une tubulure d'aspiration (31) d'une machine de nettoyage du sol (1), en particulier une tubulure d'aspiration (31) dans le réservoir d'eaux usées (5) de la machine de nettoyage du sol (1), comportant
un corps de base (39) sensiblement en forme de manchon, lequel s'étend entre une première extrémité frontale (41) et une seconde extrémité frontale (43) et lequel présente, au niveau de la première extrémité frontale (41), une ouverture d'entrée (45),
un corps flotteur (77) sensiblement annulaire, lequel est disposé autour du corps de base (39) et lequel peut être déplacé le long du corps de base (39) entre une position fermée et une position ouverte,
un couvercle (57), lequel est disposé au niveau de la première extrémité frontale (du corps de base,
dans laquelle le couvercle (57) présente au moins une ouverture d'admission (59), laquelle est conçue de telle sorte qu'elle est fermée par le corps flotteur (77) lorsque ledit corps flotteur est dans la position fermée et laquelle est ouverte lorsque le corps flotteur (77) est espacé de la position fermée, **caractérisée en ce que** dans le couvercle (57), un canal de fluide (61) est fourni, lequel est conçu de telle sorte qu'un fluide peut s'écouler de l'ouverture d'admission (59) dans l'ouverture d'entrée (45), et
un élément filtrant (69) en forme de manchon, lequel est disposé autour du corps de base (39) de telle sorte que, entre le corps de base (39) et l'élément filtrant (69), est formé un espace annulaire (79), dans lequel le corps flotteur (77) est disposé de manière à pouvoir être déplacé entre la position fermée et la position ouverte,
dans laquelle l'élément filtrant (69) est au moins partiellement formé à partir d'une matière filtrante (71) de telle sorte qu'un fluide peut traverser la matière filtrante (71), tandis que les particules contenues dans le fluide se déposent sur la matière filtrante (71).

2. Unité filtrante (37) selon la revendication 1, dans laquelle l'élément filtrant (69) est monté sur le couvercle (57) de manière amovible.

3. Unité filtrante (37) selon la revendication 1 ou 2, dans laquelle le corps de base (39) présente une bride (51) circonférentielle s'étendant vers l'extérieur contre laquelle s'appuie le corps flotteur (77) lorsque le corps flotteur (77) est dans la position ouverte, et
dans laquelle l'élément filtrant (69) s'étend jusqu'à la bride (51).

4. Unité filtrante (37) selon la revendication 3, dans laquelle la bride (51) comporte au moins une ouverture de bride (53), laquelle est fermée par le corps flotteur (77) lorsque le corps flotteur (77) est dans la position ouverte et laquelle est libérée lorsque le corps flotteur (77) est déplacé de la position ouverte à la position fermée.

5. Unité filtrante (37) selon une ou plusieurs des revendications 1 à 4, dans laquelle le corps de base (12), dans la zone de l'ouverture d'entrée ( 45), présente au moins un élément d'encliquetage, de préférence au moins un crochet d'encliquetage (55),
dans laquelle l'au moins un élément d'encliquetage (55) est conçu pour venir en prise avec au moins un élément de prise (35) sur la tubulure d'aspiration (31), et
dans laquelle le corps de base (39) et le couvercle (57) sont conçus de telle sorte que lorsque l'au moins un élément d'encliquetage (55) est en prise avec l'élément de prise (35), une liaison fluidique est fournie entre l'ouverture d'admission (59) et la tubulure d'aspiration (31).

6. Unité filtrante (37) selon la revendication 5, comportant un corps de verrouillage (63), lequel présente une section (65) cylindrique,
dans laquelle la section (65) cylindrique est insérée dans l'ouverture d'entrée (45) et est conçue pour s'opposer à la venue hors prise de l'au moins un élément d'encliquetage (55) de la tubulure d'aspiration (31).

7. Unité filtrante (4) selon la revendication 6, dans laquelle le corps de verrouillage (63) présente un collet (67), lequel s'étend au-delà du corps de base (79) dans l'espace annulaire (79),
dans laquelle le corps flotteur (77) s'appuie contre le collet (67) lorsque le corps flotteur (77) est dans la position fermée.

8. Unité filtrante (4) selon la revendication 6 ou 7, dans laquelle le couvercle (57) et le corps de base (39) sont des composants séparés et
dans laquelle le corps de verrouillage (63) est disposé entre le couvercle (57) et le corps de base (39).

9. Unité filtrante (37) selon une ou plusieurs des revendications 1 à 8, comportant un élément annulaire (81) élastique, lequel s'appuie contre une surface du corps de base (39) opposée au couvercle (57) et laquelle est conçue pour s'appuyer contre la tubulure d'aspiration (31).

10. Unité filtrante (37) selon une ou plusieurs des revendications 1 à 9, dans laquelle l'élément filtrant (69) présente une surface périphérique en forme de tamis.

11. Unité filtrante (37) selon une ou plusieurs des revendications 1 à 10, dans laquelle le corps de base (39) présente une section (49) tubulaire autour de laquelle est disposé le corps flotteur (77),
dans laquelle la section (49) tubulaire peut être enfilée sur une tubulure d'aspiration (31) d'une machine de nettoyage du sol (1).

12. Machine de nettoyage du sol (1) comportant un réservoir d'eaux usées (5),
une tubulure d'aspiration (31) s'étendant dans le réservoir d'eaux usées (5),
une turbine d'aspiration (25) en liaison fluidique avec une extrémité de la tubulure d'aspiration (31) espacée du réservoir d'eaux usées (5) pour générer une pression négative dans le réservoir d'eaux usées (5),
une conduite d'aspiration (21, 23) aboutissant au réservoir d'eaux usées (5), laquelle est reliée à un dispositif (19) destiné à la réception du liquide par pression négative à partir d'une surface de sol (11) à nettoyer,
dans laquelle est fournie une unité filtrante (37) selon une ou plusieurs des revendications 1 à 11, laquelle est reliée mécaniquement à l'extrémité (33) libre de la tubulure d'aspiration (31) disposée dans le réservoir d'eaux usées (5).
